# EUROPEAN PATENT APPLICATION

(11) **EP 2 448 326 A1**
(43) Date of publication of application: **02.05.2012**
(21) Application number: 10791558.9
(22) Date of filing: 24.06.2010
(51) Int. Cl.: H04W 36/06

(54) **BUSINESS PROCESSING METHOD, COMMUNICATION DEVICE AND COMMUNICATION SYSTEM**

(30) Priority: 26.06.2009 CN 200910148427
(71) Applicant: Huawei Device Co., Ltd., Longgang District Shenzhen Guangdong 518129 (CN)
(72) Inventor: LIU, Juan, Shenzhen Guangdong 518129 (CN); WANG, Rui, Shenzhen Guangdong 518129 (CN); CHEN, Guoqiao, Shenzhen Guangdong 518129 (CN); GUAN, Zhi, Shenzhen Guangdong 518129 (CN)
(74) Representative: Isarpatent
(86) International application number: PCT/CN2010/074359
(87) International publication number: WO 2010/149052

(57) **Abstract**

Embodiments of the present invention disclose a service processing method, a communication device, and a communication system. The service processing method includes: receiving a request message initiated by a user equipment (UE); and changing a current default bearer of the UE according to the received request message, to a bearer corresponding to a service that the UE needs to obtain in a current serving cell. The communication device includes: a generating unit, configured to generate a request message, where the request message carries information indicating a service required by the UE; and a sending unit, configured to send the request message generated by the generating unit to a network side, where the network side changes a current default bearer of the UE according to the information carried in the request message, to a bearer corresponding to a service that the UE needs to obtain in a current serving cell. According to the technical solution disclosed in the embodiments of the present invention, the UE can obtain the required service when moving between different serving cells.

## Description

This application claims priority to Chinese Patent Application No. 200910148427.5, filed with the Chinese Patent Office on June 26, 2009, and entitled "SERVICE PROCESSING METHOD, COMMUNICATION DEVICE, AND COMMUNICATION SYSTEM", which is incorporated herein by reference in its entirety.

### FIELD OF THE INVENTION

The present invention relates to the field of communications technologies, and in particular, to a service processing method, a communication device, and a communication system.

### BACKGROUND OF THE INVENTION

The 3rd Generation Partnership Project (3GPP, 3rd Generation Partnership Project) proposes the evolved packet system (EPS, Evolved Packet System). In the EPS, the emergency bearer service is used to support emergency sessions. The network supporting emergency services provides the emergency service for a user equipment (UE) that is normally attached or in the limited service state.

Generally, when a UE camps on a closed CSG cell whose closed subscriber group ID (CSG ID, Closed Subscriber Group ID) is not included in an allowed CSG list (ACL, Allowed CSG List), or a hybrid CSG cell whose resources are insufficient and whose CSG ID is not included in the ACL, the UE may obtain only an emergency service. Such cells are generally referred to as restricted serving cells. When the UE camps on a macro cell, or an open CSG cell, or a closed CSG cell whose CSG ID is included in the ACL, or a hybrid CSG cell whose resources are sufficient, or a CSG cell whose resources are insufficient but whose CSG ID is included in the ACL, the UE may obtain an ordinary service. Such cells are generally referred to as normal serving cells.

In the prior art, when the UE is in a restricted serving cell, an emergency Attach can be identified by setting Attach Type (Attach Type) in an Attach Request to emergency (Emergency) so that in the case of an emergency Attach, the mobility management entity (MME, Mobility Management Entity) on the network side may select a packet data network gateway (P-GW, PDN Gateway) for the UE by using a related parameter in mobility management entity emergency configuration data (MME Emergency Configuration Data), and establish an emergency default bearer to enable the UE to obtain an emergency service.

During research and practice of this method, the inventors of the present invention find that:
When moving between different serving cells, for example, between a restricted serving cell and a normal serving cell, the UE cannot timely obtain a required service, for example, an emergency service or a normal service.

### SUMMARY OF THE INVENTION

Embodiments of the present invention provide a service processing method, a communication device, and a communication system, which enable a UE to timely obtain a required service when moving between different serving cells.

An embodiment of the present invention provides a service processing method, including:
receiving a request message initiated by a UE; and
changing a current default bearer of the UE according to the received request message, to a bearer corresponding to a service that the UE needs to obtain in a current serving cell.

An embodiment of the present invention provides a communication device, including:
a generating unit, configured to generate a request message, where the request message carries information indicating a service required by the UE; and
a sending unit, configured to send the request message generated by the generating unit to a network side, where the network side changes a current default bearer of the UE according to the information carried in the request message, to a bearer corresponding to a service that the UE needs to obtain in a current serving cell.

An embodiment of the present invention provides a communication device, including:
a receiving unit, configured to receive a request message initiated by a UE; and
a processing unit, configured to change a current default bearer of the UE according to the received request message, to a bearer corresponding to a service that the UE needs to obtain in a current serving cell.

An embodiment of the present invention provides a communication system, including:
a UE, configured to initiate a request message, where the request message carries information indicating a service that the UE needs to obtain; and
a network side device, configured to receive the request message initiated by the UE, and change a current default bearer of the UE according to the information indicating the service that the UE needs to obtain, to a bearer corresponding to the service that the UE needs to obtain in a current serving cell.

According to the above technical solution disclosed in embodiments of the present invention, upon receiving the request message initiated by the UE, the network side changes the current default bearer of the UE to a bearer corresponding to a service that the UE needs to obtain in a current serving cell. This enables the UE to timely obtain the required service when moving between different serving cells so that the drawbacks of the prior art are overcome.

### BRIEF DESCRIPTION OF THE DRAWINGS

FIG. 1 is a flowchart of a service processing method according to an embodiment of the present invention;
FIG. 2 is a flowchart of a service processing method according to an embodiment of the present invention;
FIG. 3 is a flowchart of service processing according to a first embodiment of the present invention;
FIG. 4 is a flowchart of service processing according to a second embodiment of the present invention;
FIG. 5 is a flowchart of service processing according to a third embodiment of the present invention;
FIG. 6 is a flowchart of service processing according to a fourth embodiment of the present invention;
FIG. 7 is a flowchart of service processing according to a fifth embodiment of the present invention;
FIG. 8 is a flowchart of service processing according to a sixth embodiment of the present invention;
FIG. 9 is a flowchart of service processing according to a seventh embodiment of the present invention;
FIG. 10 is a flowchart of service processing according to an eighth embodiment of the present invention;
FIG. 11 is a schematic structural diagram of a communication device according to an embodiment of the present invention;
FIG. 12 is a schematic structural diagram of a communication device according to an embodiment of the present invention; and
FIG. 13 is a schematic structural diagram of a communication system according to an embodiment of the present invention.

### DETAILED DESCRIPTION OF THE EMBODIMENTS

Embodiments of the present invention provide a service processing method, which enables a UE to timely obtain the required service when moving between different serving cells. Embodiments of the present invention also provide a communication device and a communication system. The embodiments of the present invention are hereinafter described in detail.

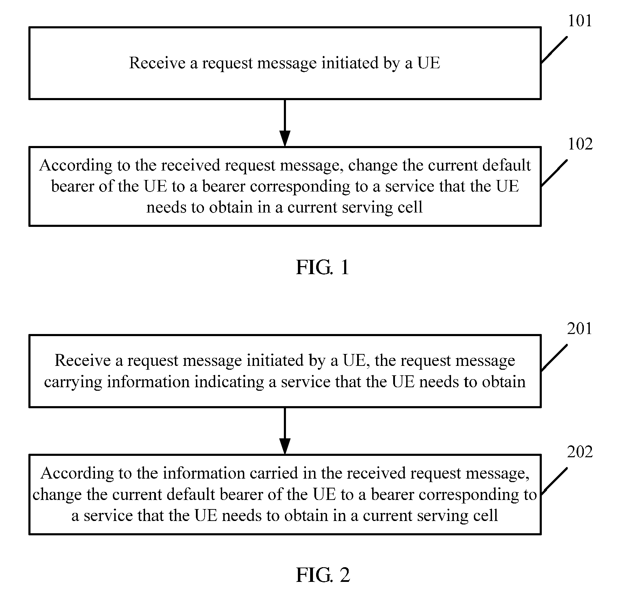

FIG. 1 is a flowchart of a service processing method according to an embodiment of the present invention. The method includes the following steps:
Step 101: Receive a request message initiated by a UE.
Step 102: According to the received request message, change the current default bearer of the UE to a bearer corresponding to a service that the UE needs to obtain in a current serving cell.

Specifically, it can be determined, according to the location information carried in the request message with information such as the subscription information of the UE, that the UE can obtain only a service, for example, a restricted service. Therefore, the current default bearer of the UE is changed to the bearer corresponding to the service that the UE needs to obtain in the current serving cell.

According to this embodiment, when receiving the request message initiated by the UE, a network side can change the current default bearer of the UE to a bearer corresponding to a service that the UE needs to obtain in a current serving cell. This enables the UE to timely obtain the required service when moving between different serving cells so that the drawbacks of the prior art are overcome.

FIG. 2 is a flowchart of a service processing method according to an embodiment of the present invention. The method includes the following steps:
Step 201: Receive a request message initiated by a UE, where the request message carries information indicating a service that the UE needs to obtain.
Step 202: According to the information carried in the received request message, change the current default bearer of the UE to a bearer corresponding to a service that the UE needs to obtain in a current serving cell.

The current default bearer of the UE in the current serving cell is changed to a normal default bearer when the request message is a tracking area update request message which carries an indication field indicating a handover from a restricted serving cell to a normal serving cell or an update type field indicating the handover from the restricted serving cell to the normal serving cell.

The current default bearer of the UE in the current serving cell is changed to an emergency default bearer when the request message is a tracking area update request message which carries an indication field indicating a handover from a normal serving cell to a restricted serving cell or an update type field indicating the handover from the normal serving cell to the restricted serving cell.

The current default bearer of the UE in the current serving cell is changed to a normal default bearer when the request message is an Attach Request message which carries an Attach Type indicating non-emergency.

The current default bearer of the UE in the current serving cell is changed to an emergency default bearer when the request message is an Attach Request message which carries an Attach Type indicating emergency.

As can be seen from this embodiment, the request message initiated by the UE is received and the request message carries information indicating the service that the UE needs to obtain. The network side can timely obtain the information and change the current default bearer of the UE to the bearer corresponding to the service that the UE needs to obtain in the current serving cell so that the UE obtains the required service when moving between different serving cells.

The service processing method is described in detail hereunder with reference to specific embodiments. For ease of description, the restricted serving cell is referred to as A-category cell and the normal serving cell is referred to as B-category cell. Eight embodiments are provided.

The first, second, and sixth embodiments are directed to the following scenario:
When a UE camps on an A-category cell, the UE obtains only a restricted service. If the UE moves from the cell to a B-category cell in a tracking area (TA, Tracking Area) that is in the same tracking area identity (TAI, Tracking Area Identity) list as the TA of the A-category cell, the UE in the IDLE (IDLE) state initiates a tracking area update (TAU, Tracking Area Updating) or Attach procedure so that the network side changes the UE state to the normal service mode and creates a normal default bearer.

The third, fourth, fifth, and seventh embodiments are directed to the following scenario:
When a UE moves from a B-category cell to an A-category cell in a TA that is in the same TAI list as the TA of the B-category cell, the UE obtains only the restricted service, and initiates a TAU or Attach procedure in the IDLE state so that the network side changes the UE state to the restricted service mode and creates an emergency default bearer for the UE.

The eight embodiment is directed to the following scenario:
When a UE camps on an A-category cell, the UE obtains only a restricted service. If there is downlink data to be transmitted to the UE, the MME pages the UE in the cell whose CSG ID is not in the ACL. In this case, an international mobile subscriber identity (IMSI, International Mobile Subscriber Identity) is used as the identifier of the UE. If the paging fails, the MME pages the UE in all cells in the TAI list. In this case, a globally unique temporary identity (GUTI, Globally Unique Temporary Identity) or an IMSI is used as the identifier of the UE.

The following describes the embodiments each.

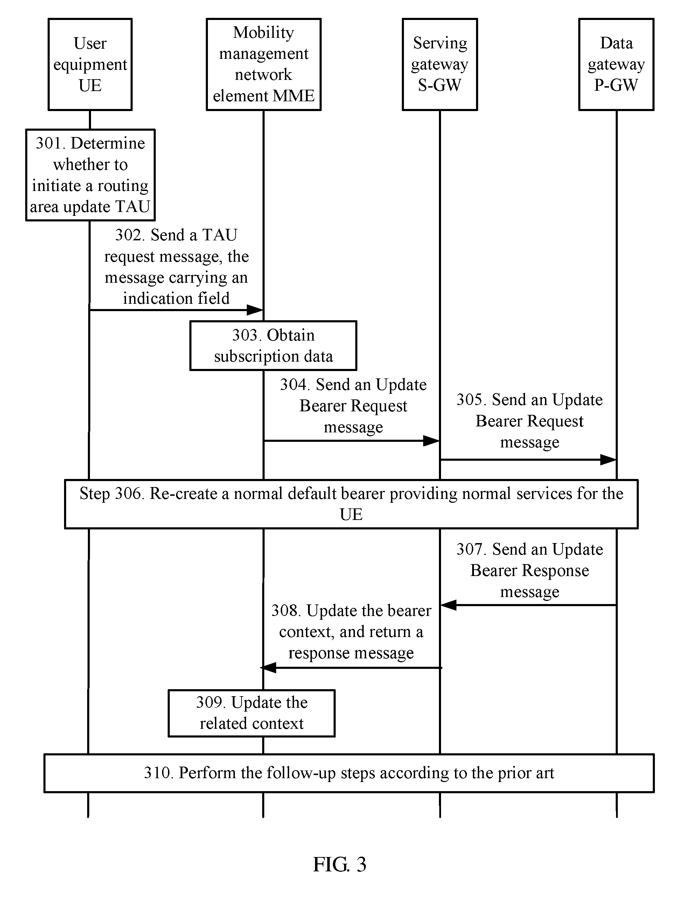

FIG. 3 is a flowchart of service processing according to a first embodiment of the present invention.

In this embodiment, when a UE camps on an A-category cell, the UE obtains only a restricted service. If the UE moves from the cell to a B-category cell in a TA that is in the same TAI list as the TA of the A-category cell, the UE in the IDLE state initiates a TAU procedure, and sends an indication field indicating emergency-to-normal conversion (Emergency-to-Normal Conversion) to a network side. The network side changes the emergency default bearer of the UE to a normal default bearer and updates the related context accordingly in addition to the existing TAU processing. The following flowchart is described by using the TAU procedure in which the serving gateway (S-GW, Serving Gateway) during movement of the UE is not changed as an example.

FIG. 3 includes the following steps:
Step 301: A UE determines whether to initiate a TAU procedure.

When a UE camps on an A-category cell, the UE obtains only a restricted service and the default bearer of the UE is an emergency bearer. When the UE is in the IDLE state and moves to a B-category cell in a TA that is in the same TAI list as the TA of the A-category cell, the UE obtains the cell ID of the cell in broadcast mode, and determines whether to initiate a TAU procedure according to the cell ID. If the cell is included in the forbidden TA of the forbidden public land mobile network (PLMN, Public Land Mobile Network), the UE remains in the emergency service (Emergency) state; otherwise, the UE initiates a TAU procedure in the B-category cell and performs step 302.

It should be noted that the UE may directly initiate a TAU procedure without performing step 301 to determine whether to initiate a TAU procedure.
Step 302: The UE sends a TAU request message to an MME, where the request message carries information indicating conversion from an emergency service to the normal service.

The UE sends the TAU request message to the MME through the eNB that controls the B-category cell, where the TAU request message carries the EPS bearer state and further carries an indication field (emergency-to-normal conversion, Emergency-to-Normal Conversion). The indication field indicates the TAU initiated by the UE after the UE is handed over from a cell where only the restricted service can be obtained to a cell where the normal service can be obtained.
Step 303: The MME obtains subscription data of the UE.

The MME obtains the subscription data of the UE from an original MME that provides services (also referred to as an Old MME) through a Context Request (Context Request) procedure, where the subscription data includes the subscribed quality of service profile (EPS subscribed QoS profile), an access point name (APN, Access Point Name), an aggregate maximum bit rate of the subscribed access point name (Subscribed-APN-AMBR (Aggregate Maximum Bit Rate)), a packet data network address (PDN Address), a packet data network gateway address identity (P-GW identity), and a packet data network type (PDN Type).
Step 304: The MME sends an Update Bearer Request message to an S-GW, where the message carries new parameter information.

The MME uses the APN in MME Emergency Configuration Data to select an S-GW or directly obtain an S-GW from the MME Emergency Configuration Data.

If the S-GW does not change during movement of the UE, the MME adds parameter information to the Update Bearer Request message (Update Bearer Request) sent to the S-GW, such as the P-GW address, the PDN Address, APN, and a default bearer QoS (Default EPS Bearer QoS), the PDN type, and an APN-AMBR.

It should be noted that if the S-GW changes during movement of the UE, the MME adds the above parameter information to a Create Bearer Request message (Create Bearer Request) sent to a new S-GW.
Step 305: The S-GW sends the Update Bearer Request message to the P-GW, where the message carries new parameter information.

When receiving the Create Bearer Request message or Update Bearer Request message, the S-GW sends the Update Bearer Request message (Update Bearer Request) to a P-GW corresponding to the P-GW address carried in the above message, and adds parameter information to the sent Update Bearer Request message, such as the APN, the S-GW address for the user plane (S-GW Address for the user plane), the S-GW tunnel endpoint ID of the user plane (S-GW TEID of the user plane), the S-GW TEID of the control plane (S-GW TEID of the control plane), a radio access technology type (RAT (Radio Access Technology) type), Default EPS Bearer QoS, a PDN Type, a PDN Address, a subscribed APN-AMBR, and a bearer identity (EPS Bearer Identity).
Step 306: The P-GW re-creates, for the UE, a normal default bearer providing normal services.

The P-GW uses the received message and a parameter carried in the message to re-create the normal default bearer providing normal services and create a new item in the EPS bearer context of the P-GW.
Step 307: The P-GW sends an Update Bearer Response message to the S-GW, where the message carries new parameter information.

The P-GW returns the Update Bearer Response message (Update Bearer Response) to the S-GW. The message carries new parameter information such as the P-GW Address for the user plane, the P-GW TEID of the user plane, the P-GW TEID of the control plane, the PDN Type, the PDN Address, an EPS Bearer Identity, and an EPS Bearer QoS.
Step 308: The S-GW updates the bearer context and returns a response message to the MME.

The S-GW updates the bearer context according to the received message and parameter carried in the message, and returns a Create Bearer Response message or the Update Bearer Response message to the MME. The message carries new parameter information such as the PDN Type, the PDN Address, the S-GW address for User Plane, the S-GW TEID for User Plane, the S-GW TEID for control plane, an EPS Bearer Identity, the EPS Bearer QoS, P-GW addresses and a TEID, and the APN-AMBR.
Step 309: The MME updates the related context.

The MME updates the mobility management (MM, Mobility Management) context and EPS bearer context according to the received message and parameter carried in the message.
Step 310: After the follow-up steps in the prior art are performed, the TAU procedure ends.

The TAU procedure is continued according to the prior art until the procedure ends. In this way, the UE can timely obtain the normal service.

As can be seen from this embodiment, the UE initiates a TAU procedure and adds an indication field to notify the network side that the TAU procedure is the TAU triggered by the handover of the UE from a cell where only the restricted service can be obtained to a cell where the normal service can be obtained. The network side, when receiving the notification, changes the emergency default bearer of the UE to the normal default bearer so that the UE can timely obtain the normal service rather than the emergency service. In this way, the drawbacks of the prior art are overcome.

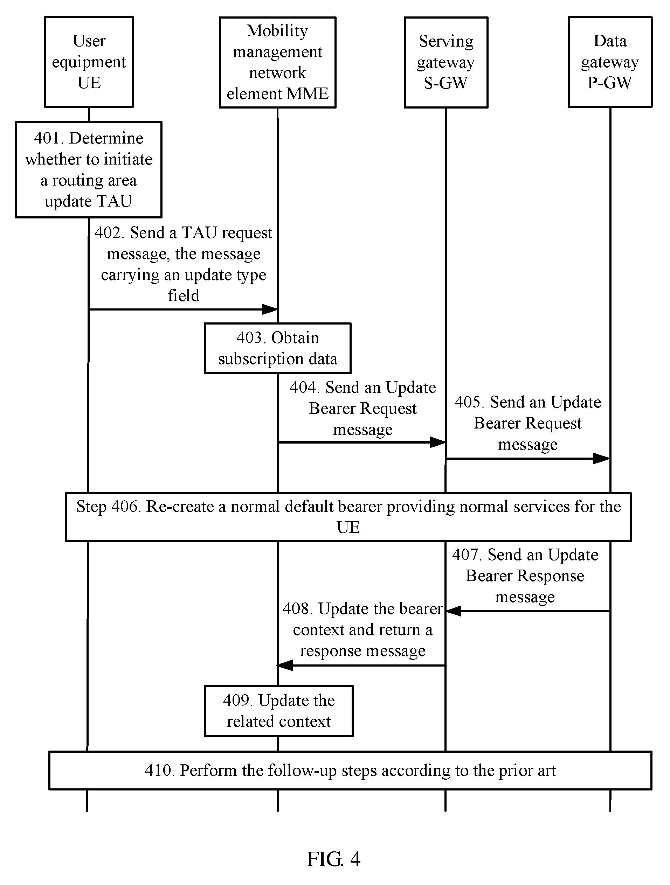

FIG. 4 is a flowchart of service processing according to a second embodiment of the present invention. The second embodiment differs from the first one in that an update type (EPS update type) field is sent as an indication to a network side.

In this embodiment, when a UE camps on an A-category cell, the UE obtains only a restricted service. If the UE moves from the cell to a B-category cell in a TA that is in the same TAI list as the TA of the A-category cell, the UE in the IDLE state initiates a TAU procedure, and sends an update type field (EPS update type) to the network side. The network side changes the emergency default bearer of the UE to a normal default bearer and updates the related context accordingly in addition to the existing TAU processing. The following flowchart is described by using the TAU procedure in which the S-GW during movement of the UE is not changed as an example.

FIG. 4 includes the following steps:
Step 401: The UE determines whether to initiate a TAU procedure.

This step is the same as step 301 in the first embodiment.
Step 402: The UE sends a TAU request message to an MME, where the request message carries information indicating conversion from an emergency service to the normal service.

The UE sends the TAU request message to the MME through an eNB that controls the B-category cell. The update type field carried in the message is set to "Emergency-to-Normal TA updating". The field indicates the TAU triggered by the UE after the UE is handed over from a cell where only the restricted service can be obtained to a cell where the normal service can be obtained.

The following table shows the value and meaning of the EPS update type field.

**Table 1**

| EPS update type value (octet 1, bits 1 to 3) | | | |
|---|---|---|---|
| 1 | 1 | 0 | Emergency-to-Normal TA updating |

Steps 403-410: These steps are the same as steps 303-310. For details, refer to the description of the first embodiment.

It can be seen from the content of the second embodiment that the second and first embodiments have the same effect.

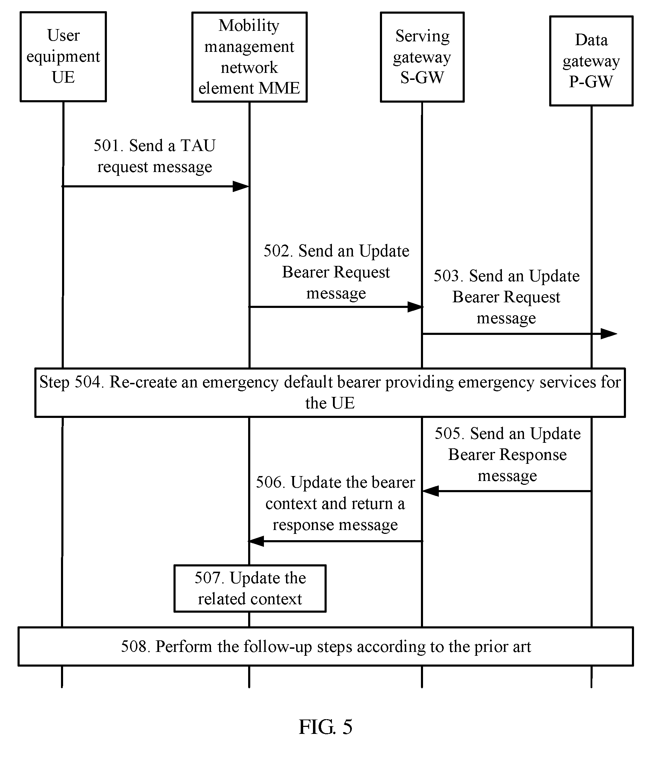

FIG. 5 is a flowchart of service processing according to a third embodiment of the present invention. The third embodiment differs from the first and second embodiments in that an emergency service rather than the normal service needs to be obtained.

In this embodiment, when a UE moves from a B-category cell to an A-category cell in a TA that is not in the same TAI list as the TA of the A-category cell, the UE obtains only the restricted service and initiates a TAU procedure in the IDLE state. The network side changes the normal default bearer of the UE to an emergency default bearer and updates the related context accordingly in addition to the existing TAU processing. The following flowchart is described by using the TAU procedure in which the S-GW during movement of the UE is not changed as an example.
Step 501: The UE sends a TAU request message to an MME.

The UE is in the IDLE state and moves from a B-category cell to an A-category cell in a TA that is not in the same TAI list as the TA of the B-category cell.

The UE initiates a TAU procedure in the A-category cell and sends a TAU request message through an HeNB to the MME.
Step 502: The MME determines, according to the location information carried in the request message with information such as the subscription information of the UE, that the UE can obtain only a restricted service, and sends an Update Bearer Request message to the S-GW, where the Update Bearer Request message carries new parameter information for changing the current default bearer to an emergency default bearer.

The MME uses the APN in the MME Emergency Configuration Data to select an S-GW or directly obtain an S-GW from the MME Emergency Configuration Data.

If the S-GW does not change during movement of the UE, the MME adds parameter information such as an em (emergency) APN, an em QoS Profile, an em APN-AMBR, and an em P-GW Address to the Update Bearer Request message (Update Bearer Request) sent to the S-GW. In addition, the Update Bearer Request message may also carry the IMSI of the UE if available.

It should be noted that if the S-GW changes during movement of the UE, the MME adds the above parameter information to a Create Bearer Request message (Create Bearer Request) sent to a new S-GW.
Step 503: The S-GW sends an Update Bearer Request message to the P-GW, where the message carries new parameter information.

When receiving the Create Bearer Request or Update Bearer Request message, the S-GW sends the Update Bearer Request message to the P-GW corresponding to the P-GW address carried in the request message, and adds parameter information to the request message to be sent, such as an APN, the S-GW Address for the user plane, the S-GW TEID of the user plane, the S-GW TEID of the control plane, a RAT type, an em QoS Profile, a PDN Type, the em P-GW Address, the em APN-AMBR, and the EPS Bearer Identity. In addition, if the IMSI of the UE is available, the request message may also include the IMSI.
Step 504: The P-GW re-creates an emergency default bearer providing emergency services for the UE.

The P-GW uses the received message and a parameter carried in the message to re-create the emergency default bearer providing emergency services and create a new item in the EPS bearer context of the P-GW.
Step 505: The P-GW sends an Update Bearer Response message to the S-GW, where the message carries new parameter information.

The P-GW returns the Update Bearer Response message (Update Bearer Response) to the S-GW, where the message carries new parameter information such as the P-GW Address for the user plane, P-GW TEID of the user plane, P-GW TEID of the control plane, PDN Type, PDN Address, EPS Bearer Identity, and EPS Bearer QoS.
Step 506: The S-GW updates the bearer context and returns a response message to the MME.

The S-GW updates the bearer context according to the received message and parameter carried in the message, and returns the Create Bearer Response message or Update Bearer Response message to the MME. The message carries new parameter information such as the PDN Type, PDN Address, S-GW address for User Plane, S-GW TEID for User Plane, S-GW TEID for control plane, EPS Bearer Identity, EPS Bearer QoS, P-GW addresses and TEID, and APN-AMBR.
Step 507: The MME updates the related context.

The MME updates the mobility management (MM, Mobility Management) context and EPS bearer context.
Step 508: After the follow-up steps in the prior art are performed, the TAU procedure ends.

The TAU procedure is continued according to the prior art until the procedure ends. In this way, the UE can timely obtain the emergency service.

As can be seen from this embodiment, when the UE initiates a TAU procedure, the network learns, according to the received request message and subscription information, that the UE can be provided with only the emergency service, and changes the normal default bearer of the UE to an emergency default bearer so that the UE can timely obtain the emergency service rather than the normal service. In this way, the drawbacks of the prior art are overcome.

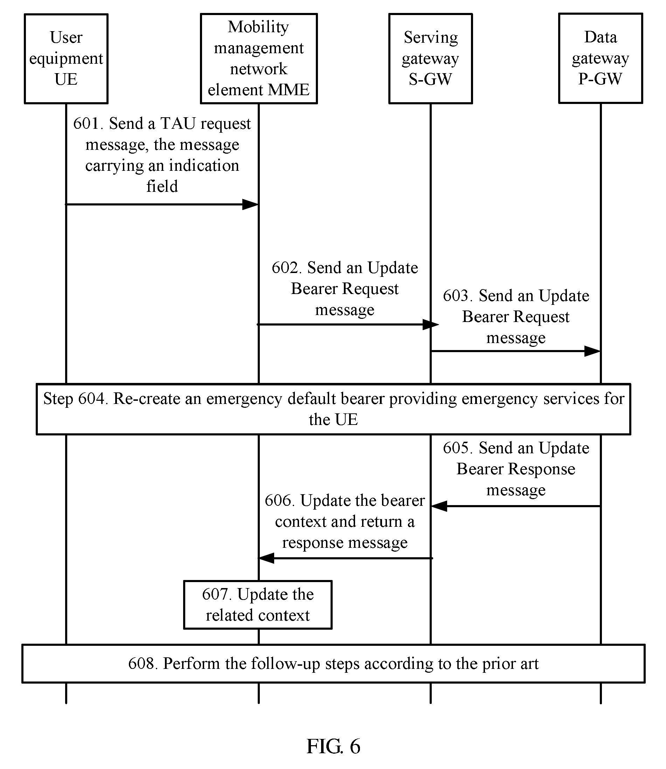

FIG. 6 is a flowchart of service processing according to a fourth embodiment of the present invention; The fourth embodiment differs from the first and second embodiments in that the emergency service rather than the normal service needs to be obtained. In addition, the fourth embodiment differs from the third one in that the TAU request message carries an indication field.

In this embodiment, when a UE moves from a B-category cell to an A-category cell in a TA that is in the same TAI list as the TA of the B-category cell, the UE obtains a restricted service. The UE initiates a TAU procedure in the IDLE state, and sends an indication field indicating normal-to-emergency conversion (Normal-to-Emergency Conversion) to the network side. The network side changes the normal default bearer of the UE to an emergency default bearer and updates the related context accordingly in addition to the existing TAU processing. The following flowchart is described by using the TAU procedure in which the S-GW during movement of the UE is not changed as an example.

FIG. 6 includes the following steps:
Step 601: The UE sends a TAU request message to an MME, where the request message carries information indicating conversion from the emergency service to the normal service.

The UE is in the IDLE state and moves from a B-category cell to an A-category cell in a TA that is in the same TAI list as the TA of the B-category cell.

The UE initiates the TAU procedure to the MME in the A-category cell, and sends the TAU request message through an HeNB to the MME, where the TAU request message carries the EPS bearer state and further carries an indication field (normal-to-emergency conversion, Normal-to-Emergency Conversion). The indication field indicates the TAU initiated by the UE after the UE is handed over from a cell where the normal service can be obtained to a cell where only the restricted service can be obtained.
Step 602: The MME sends an Update Bearer Request message to an S-GW, where the message carries information about new parameter information.

The MME uses the APN in the MME Emergency Configuration Data to select an S-GW or directly obtain an S-GW from the MME Emergency Configuration Data.

If the S-GW does not change during movement of the UE, the MME adds parameter information to the Update Bearer Request message (Update Bearer Request) sent to the S-GW, such as an em (emergency) APN, an em QoS Profile, an em APN-AMBR, and an em P-GW Address. In addition, the Update Bearer Request message may also carry the IMSI of the UE if available.

It should be noted that if the S-GW changes during movement of the UE, the MME adds the above parameter information to a Create Bearer Request message (Create Bearer Request) sent to a new S-GW.
Step 603: The S-GW sends an Update Bearer Request message to a P-GW, where the message carries new parameter information.

When receiving the Create Bearer Request or Update Bearer Request message, the S-GW sends the Update Bearer Request message to the P-GW corresponding to the P-GW address carried in the request message, and adds parameter information to the request message to be sent, such as the APN, S-GW Address for the user plane, S-GW TEID of the user plane, S-GW TEID of the control plane, RAT type, em QoS Profile, PDN Type, em P-GW Address, em APN-AMBR, and EPS Bearer Identity. In addition, if the IMSI of the UE is available, the request message may also include the IMSI.
Step 604: The P-GW re-creates an emergency default bearer providing emergency services for the UE.

The P-GW uses the received message and a parameter carried in the message to re-create the emergency default bearer providing emergency services and create a new item in the EPS bearer context of the P-GW.
Step 605: The P-GW sends an Update Bearer Response message to the S-GW, where the message carries new parameter information.

The P-GW returns an Update Bearer Response message (Update Bearer Response) to the S-GW, where the message carries new parameter information such as the P-GW Address for the user plane, P-GW TEID of the user plane, P-GW TEID of the control plane, PDN Type, PDN Address, EPS Bearer Identity, and EPS Bearer QoS.
Step 606: The S-GW updates the bearer context and returns a response message to the MME.

The S-GW updates the bearer context according to the received message and parameter carried in the message, and returns the Create Bearer Response message or Update Bearer Response message to the MME. The message carries new parameter information such as PDN Type, PDN Address, S-GW address for User Plane, S-GW TEID for User Plane, S-GW TEID for control plane, EPS Bearer Identity, EPS Bearer QoS, P-GW addresses and TEID, and APN-AMBR.
Step 607: The MME updates the related context.

The MME updates the mobility management (MM, Mobility Management) context and EPS bearer context.
Step 608: After the follow-up steps in the prior art are performed, the TAU procedure ends.

The TAU procedure is continued according to the prior art until the procedure ends. In this way, the UE can timely obtain the emergency service.

As can be seen from this embodiment, the UE initiates a TAU procedure and adds an indication field to notify the network side that the TAU procedure is the TAU triggered by handover of the UE from a cell where the normal service can be obtained to a cell where only the restricted service can be obtained. The network, upon receiving the notification, changes the normal default bearer of the UE to an emergency default bearer so that the UE can timely obtain the emergency service rather than the normal service. In this way, the drawbacks of the prior art are overcome.

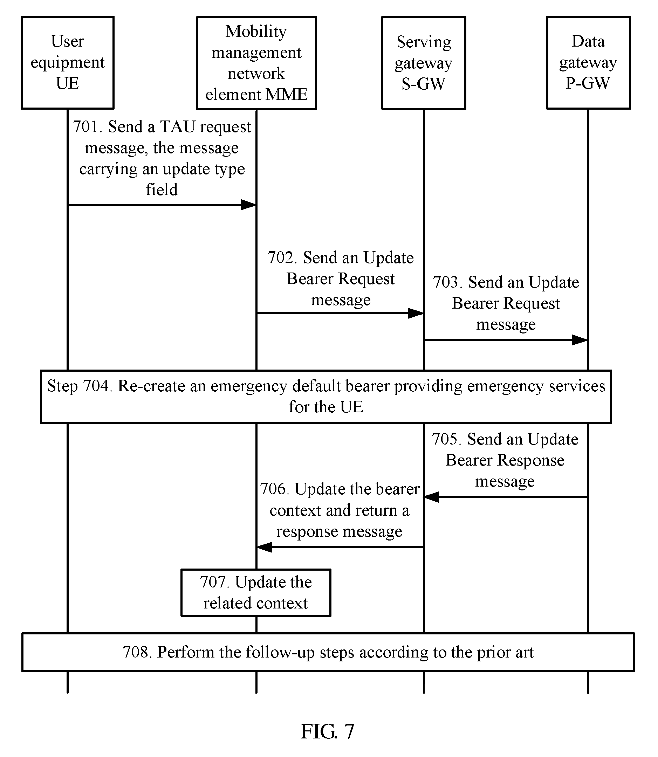

FIG. 7 is a flowchart of service processing according to a fifth embodiment of the present invention. The fifth embodiment differs from the fourth embodiment in that an update type (EPS update type) field is sent as an indication to the network side.

In this embodiment, when a UE moves from a B-category cell to an A-category cell in a TA that is in the same TAI list as the TA of the B-category cell, the UE obtains only a restricted service. The UE initiates a TAU procedure in the IDLE state, and sends an update type (EPS update type) field to the network side. The network side changes the normal default bearer of the UE to an emergency default bearer and updates the related context accordingly in addition to the existing TAU processing. The following flowchart is described by using the TAU procedure in which the S-GW during movement of the UE is not changed as an example.

FIG. 7 includes the following steps:
Step 701: The UE sends a TAU request message to an MME, where the request message carries information indicating conversion from the normal service to the emergency service.

The UE is in the IDLE state and moves from a B-category cell to an A-category cell in a TA that is in the same TAI list as the TA of the B-category cell.

The UE initiates a TAU procedure in the A-category cell and sends the TAU request message to the MME through the HeNB. The EPS update type field carried in the message is set to "normal-to-emergency, Normal-to-Emergency TA updating". The field indicates the TAU triggered by the UE after the UE is handed over from a cell where the normal service can be obtained to a cell where the only the restricted service can be obtained.

The following table shows the value and meaning of the EPS update type field.

**Table 2**

| EPS update type value (octet 1, bits 1 to 3) | | | |
|---|---|---|---|
| 1 | 1 | 1 | Normal-to-Emergency TA updating |

Steps 702-708: These steps are the same as steps 602-608. For details, refer to the description of the fourth embodiment.

It can be seen from the content of this embodiment that the fourth and third embodiments have the same effect.

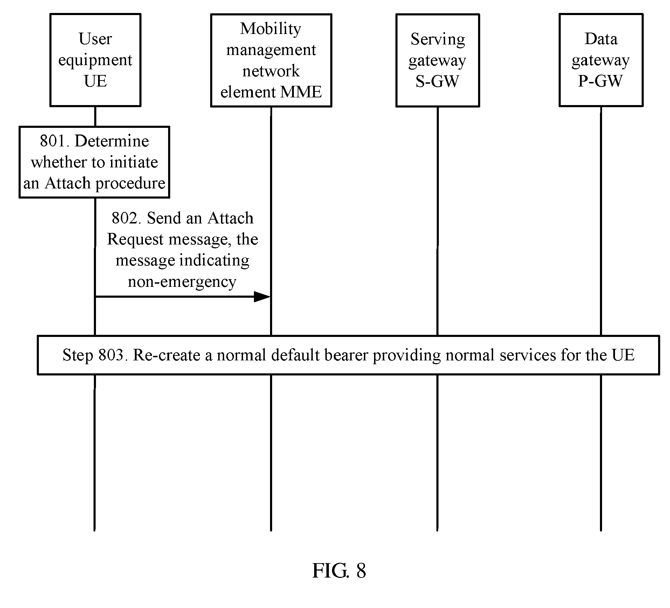

FIG. 8 is a flowchart of service processing according to a sixth embodiment of the present invention. The sixth embodiment differs from the first embodiment in the initiated Attach procedure.

In this embodiment, when a UE camps on an A-category cell, the UE obtains only a restricted service. If the UE moves from the cell to a B-category cell in a TA that is in the same TAI list as the TA of the A-category cell, the UE in the IDLE state initiates an Attach procedure so that the network side changes an emergency default bearer to a normal default bearer.

FIG. 8 includes the following steps:
Step 801: The UE determines whether to initiate an Attach procedure.

When a UE camps on an A-category cell, the UE obtains only a restricted service and the default bearer of the UE is an emergency bearer. When the UE is in the IDLE state and moves to a B-category cell in a TA that is in the same TAI list as the TA of the A-category cell, the UE obtains the cell ID in broadcast mode, and determines whether to initiate a TAU procedure according to the cell ID. If the cell is included in the forbidden TA of the forbidden PLMN, the UE remains in the emergency service (Emergency) state; otherwise, the UE initiates an Attach procedure in the B-category cell and performs step 802.

It should be noted that the UE may directly initiate an Attach procedure without performing step 801 to determine whether to initiate an Attach procedure.
Step 802: The UE sends an Attach Request message to an MME. The request message indicates that the Attach is a non-emergency Attach.

The UE sets Attach Type to "nonEmergency" in the Attach Request message to identify a non-emergency Attach.
Step 803: The MME selects a P-GW to create a normal default bearer for the UE.

If the MME stores the subscription data related to the normal default bearer, such as, EPS subscribed QoS profile, APN, Subscribed-APN-AMBR, PDN Address, P-GW identity, and PDN Type, a normal Attach procedure is performed by using the subscription data, and a P-GW is selected to create a normal default bearer for the UE so that the UE can timely obtain the required normal service.

If the MME does not store the subscription data related to the normal default bearer, related subscription data needs to be obtained from the home subscriber server (HSS, Home Subscriber Server) by using an update location procedure (Update Location). By using the obtained subscription data, a normal Attach procedure is performed and a P-GW is selected to create a normal default bearer for the UE so that the UE can timely obtain the normal service.

As can be seen from this embodiment, the UE initiates an Attach procedure, where the carried indication field notifies the network side that the Attach is a non-emergency Attach. Therefore, the network, when receiving the notification, changes the emergency default bearer of the UE to an ordinary default bearer so that the UE can timely obtain the normal service rather than the emergency service. In this way, the drawbacks of the prior art are overcome.

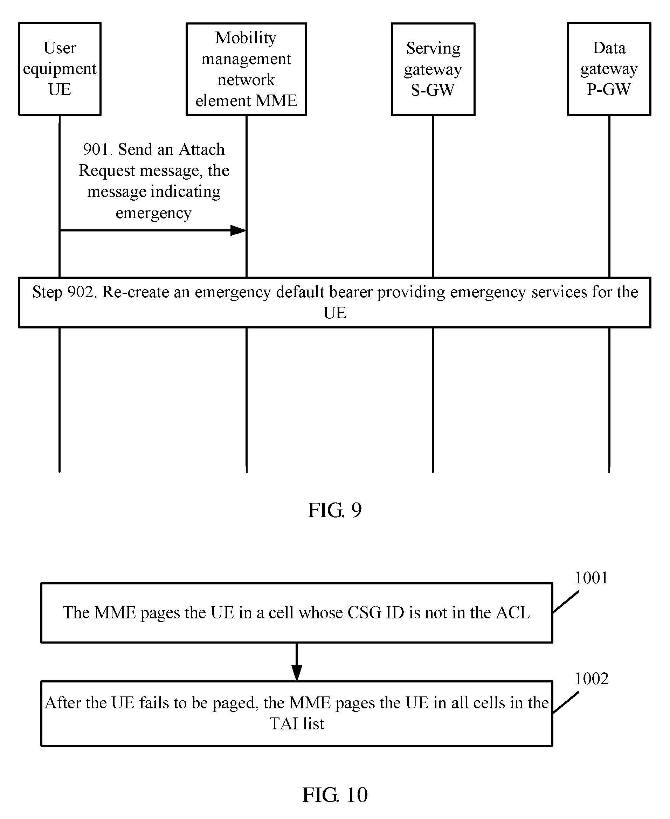

FIG. 9 is a flowchart of service processing according to a seventh embodiment of the present invention. The seventh embodiment differs from the sixth embodiment in that the emergency service rather than the common service needs to be obtained.

In this embodiment, when a UE moves from a B-category cell to an A-category cell in a TA that is in the same TAI list as the TA of the B-category cell, the UE obtains only a restricted service. The UE in the IDLE state initiates an Attach procedure so that the network side changes the normal default bearer to an emergency default bearer.

FIG. 9 includes the following steps:
Step 901: The UE sends an Attach Request message to an MME. The request message indicates that an Attach type is an emergency Attach type.

The UE is in the IDLE state and moves from a B-category cell to an A-category cell in a TA that is in the same TAI list as the TA of the B-category cell. The UE initiates an Attach procedure in an A-category cell, and sends an Attach Request message through an HeNB to an MME, and sets Attach Type to "Emergency" in the Attach Request message to identify an emergency Attach. If no valid GUTI or packet temporary mobile subscriber identity (P-TMSI, Packet Temporary Mobile Subscriber Identity) is available, the Attach Request message may include the IMSI. If no IMSI is available, the Attach Request message may include the IMEI.
Step 902: The MME selects a P-GW for the UE to create an emergency default bearer.

The MME selects a P-GW for the UE according to a parameter included in the MME emergency configuration data (MME Emergency Configuration Data), such as an em APN, an em QoS Profile, an em APN-AMBR, and an em P-GW ID, ignores the subscription data, and creates an emergency default bearer for the UE. In this way, the UE can timely obtain the emergency service.

As can be seen from this embodiment, the UE initiates an Attach procedure, where the carried indication field notifies the network side that the Attach is an emergency Attach. Therefore, the network, upon receiving the notification, changes the normal default bearer of the UE to an emergency default bearer so that the UE can timely obtain the emergency service rather than the normal service. In this way, the drawbacks of the prior art are overcome.

It should be noted that the first embodiment to the sixth embodiment are also applicable to the scenario where the UE in the EPS is handed over between a cell where the service is restricted (for example, the TA of the cell is a forbidden tracking area) and a cell where the normal service can be obtained. As regards the step of changing an emergency default bearer or a normal default bearer, the first embodiment to the fourth embodiment are also applicable to the scenario where the bearer needs to be changed in the TAU procedure triggered by other cases. In these embodiments, if the MME is the same as the original serving MME, the Context Request procedure can be skipped, and subscription data related to the bearer, for example, EPS subscribed QoS profile, APN, Subscribed-APN-AMBR, PDN Address, P-GW identity, and PDN Type, can be directly obtained from the current MME.

FIG. 10 is a flowchart of service processing according to an eighth embodiment of the present invention. According to this embodiment, the UE can be timely paged.

According to this embodiment, when a UE camps on an A-category cell, the UE obtains only a restricted service. An MME pages the UE as follows: paging the UE by using the IMSI as the identifier of the UE in the cell whose CSG ID is not in the ACL; and after the previous paging fails, paging the UE by using the GUTI or IMSI as the identifier of the UE in all cells in the TAI list.

FIG. 10 includes the following steps:
Step 1001: The MME pages the UE in a cell whose CSG ID is not in the ACL.

When a UE camps on an A-category cell, the UE obtains only a restricted service and the default bearer of the UE is an emergency default bearer. In this case, if there is a downlink service call for the UE, the network side pages the UE. The MME sends a paging message in a CSG cell whose CSG ID is not in the ACL in the current TA, and uses the IMSI as the identifier of the UE.

If the UE camps on the CSG cell whose CSG ID is not in the ACL, the UE can be paged.
Step 1002: After the UE fails to be paged, the MME pages the UE in all cells in the TAI list.

After the paging in step 1001 fails, the MME sends a paging message in all cells in the TAI list including the current TA of the UE, and uses the GUTI or IMSI as the identifier of the UE. If the UE moves to a B-category cell, the UE may also be paged.

As can be seen from this embodiment, this paging procedure ensures that a UE can be timely paged regardless of whether it moves to a restricted serving cell or a normal serving cell.

The service processing methods according to the embodiments of the present invention are described in detail above. Corresponding to the method, an embodiment of the present invention provides a communication device and a communication system.

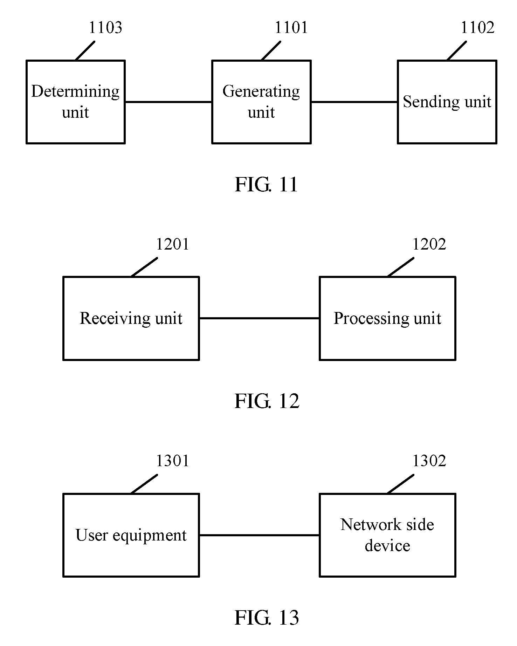

FIG. 11 is a schematic structural diagram of a communication device according to an embodiment of the present invention. The communication device is a UE.

As shown in FIG. 11, the communication device includes a generating unit 1101 and a sending unit 1102.

The generating unit 1101 is configured to generate a request message, where the request message carries information indicating the service required by a UE.

The sending unit 1102 is configured to send the request message generated by the generating unit 1101 to a network side, where the network side changes the current default bearer of the UE according to the information carried in the request message, to a bearer corresponding to a service that the UE needs to obtain in a current serving cell.

The communication device further includes a determining unit 1103.

The determining unit 1103 is configured to determine whether a current target cell is a restricted serving cell, and instruct the generating unit 1101 to generate a request message if the current target cell is not a restricted serving cell.

FIG. 12 is a schematic structural diagram of a communication device according to an embodiment of the present invention. The communication device is a mobility management entity (MME).

As shown in FIG. 12, the communication device includes a receiving unit 1201 and a processing unit 1202.

The receiving unit 1201 is configured to receive a request message initiated by a UE.

The processing unit 1202 is configured to change the current default bearer of the UE according to the received request message, to a bearer corresponding to a service that the UE needs to obtain in a current serving cell.

The request message received by the receiving unit 1201 carries information indicating the service that the UE needs to obtain. The processing unit 1202 changes the current default bearer of the UE according to the information that is carried in the request message and indicates the service that the UE needs to obtain, to a bearer corresponding to the service that the UE needs to obtain in the current serving cell.

The processing unit 1202 changes the current default bearer of the UE in the current serving cell to a normal default bearer when the request message is a tracking area update request message which carriers an indication field indicating a handover from a restricted serving cell to a normal serving cell or an update type field indicating the handover from the restricted serving cell to the normal serving cell.

The processing unit 1202 changes the current default bearer of the UE in the current serving cell to an emergency default bearer when the request message is a tracking area update request message which carries an indication field indicating a handover from a normal serving cell to a restricted serving cell or an update type field indicating the handover from the normal serving cell to the restricted serving cell.

The processing unit 1202 changes the current default bearer of the UE in the current serving cell to a normal default bearer when the request message is an Attach message which carries Attach Type indicating non-emergency.

The processing unit 1202 changes the current default bearer of the UE in the current serving cell to an emergency default bearer when the request message is an Attach message which carries Attach Type indicating emergency.

FIG. 13 is a schematic structural diagram of a communication system according to an embodiment of the present invention.

As shown in FIG. 13, the communication system includes a UE 1301 and a network side device 1302.

The UE 1301 is configured to initiate a request message.

The network side device 1302 is configured to receive the request message initiated by the UE 1301, and change the current default bearer of the UE 1301 according to the received request message, to a bearer corresponding to a service that the UE needs to obtain 1301 in a current serving cell.

The request message initiated by the UE 1301 carries information indicating the service that the UE 1301 needs to obtain. The network side device 1302 changes the current default bearer of the UE 1301 according to the information carried in the request message initiated by the UE 1301 and indicating the service that the UE 1301 needs to obtain, to a bearer corresponding to the service that the UE 1301 needs to obtain in the current serving cell.

The network side device 1302 changes the current default bearer of the UE 1301 in the current serving cell to a normal default bearer when the request message is a tracking area update request message which carries an indication field indicating a handover from a restricted serving cell to a normal serving cell or an update type field indicating the handover from the restricted serving cell to the normal serving cell.

The network side device 1302 changes the current default bearer of the UE 1301 in the current serving cell to an emergency default bearer when the request message is a tracking area update request message which carries an indication field indicating a handover from a normal serving cell to a restricted serving cell or an update type field indicating the handover from the normal serving cell to the restricted serving cell.

The network side device 1302 changes the current default bearer of the UE 1301 in the current serving cell to a normal default bearer when the request message is an Attach message which carries Attach Type indicating non-emergency.

The network side device 1302 changes the current default bearer of the UE 1301 in the current serving cell to an emergency default bearer when the request message is an Attach Request message which carries Attach Type indicating emergency.

The UE 1301 has a structure as shown in FIG. 11. The network side device 1302 has a structure as shown in FIG. 12. For details, refer to the above description.

According the embodiments of the present invention, upon receiving the request message initiated by the UE, the network side changes the current default bearer of the UE to a bearer corresponding to a service that the UE needs to obtain in a current serving cell. This enables the UE to timely obtain the required service when moving between different serving cells so that the drawbacks of the prior art are overcome.

Persons skilled in the art understand that all or part of the steps of the methods according to the preceding embodiments can be implemented by hardware following instructions of programs. The programs may be stored in a computer readable storage medium. The storage medium may be a read only memory (ROM, Read Only Memory), a random access memory (RAM, Random Access Memory), a magnetic disk, or a compact disk-read only memory.

Detailed above are the service processing method, communication device, and communication system according to the embodiments of the present invention. Exemplary embodiments are used to illustrate the principle and implementation of the present invention. Descriptions of such exemplary embodiments are merely intended to help understand the methods and core ideas of the present invention. It is apparent that persons skilled in the art can make various modifications and variations to the invention without departing from the spirit and scope of the invention. Therefore, the specification shall not be construed as a limitation on the invention.

## Claims

1. A service processing method, comprising:
receiving a request message initiated by a user equipment (UE); and
changing a current default bearer of the UE according to the received request message, to a bearer corresponding to a service that the UE needs to obtain in a current serving cell.

2. The method according to claim 1, wherein:
the request message carries information indicating the service that the UE needs to obtain; and
the changing a current default bearer of the UE according to the received request message, to a bearer corresponding to a service that the UE needs to obtain in a current serving cell is specifically:
changing the current default bearer of the UE according to the information that is carried in the request message and indicates the service that the UE needs to obtain, to the bearer corresponding to the service that the UE needs to obtain in the current serving cell.

3. The method according to claim 2, wherein:
the request message is a tracking area update (TAU) request message, wherein the TAU request message carries an indication field indicating a handover from a restricted serving cell to a normal serving cell or an update type field indicating the handover from the restricted serving cell to the normal serving cell; and
the changing a current default bearer of the UE to a bearer corresponding to a service that the UE needs to obtain in a current serving cell is specifically:
changing the current default bearer of the UE in the current serving cell to a normal default bearer;
or,
the request message is a TAU request message, wherein the TAU request message carries an indication field indicating a handover from a normal serving cell to a restricted serving cell or an update type field indicating the handover from the normal serving cell to the restricted serving cell; and
the changing a current default bearer of the UE to a bearer corresponding to a service that the UE needs to obtain in a current serving cell is specifically:
changing the current default bearer of the UE in the current serving cell to an emergency default bearer;
or,
the request message is an Attach Request message, wherein the Attach Request message carries Attach Type indicating non-emergency; and
the changing a current default bearer of the UE to a bearer corresponding to a service that the UE needs to obtain in a current serving cell is specifically:
changing the current default bearer of the UE in the current serving cell to a normal default bearer;
or,
the request message is an Attach Request message, wherein the Attach Request message carries Attach Type indicating emergency; and
the changing a current default bearer of the UE to a bearer corresponding to a service that the UE needs to obtain in a current serving cell is specifically:
changing the current default bearer of the UE in the current serving cell to an emergency default bearer.

4. The method according to claim 3, wherein:
the received request message initiated by the UE is a request message initiated by the UE after the UE determines that a current target cell is a normal serving cell when the request message is the TAU request message which carries the indication field indicating a handover from the restricted serving cell to the normal serving cell or the update type field indicating the handover from the restricted serving cell to the normal serving cell.

5. The method according to any one of claims 1 to 4, wherein:
the changing a current default bearer of the UE to a bearer corresponding to a service that the UE needs to obtain in a current serving cell comprises:
carrying, by a mobility management entity (MME), a serving gateway, and a data gateway, a parameter required for creating the bearer, and changing, by using the parameter, the current default bearer of the UE to the bearer corresponding to the service that the UE needs to obtain in the current serving cell.

6. A communication device, comprising:
a generating unit, configured to generate a request message, wherein the request message carries information indicating a service required by the user equipment (UE); and
a sending unit, configured to send the request message generated by the generating unit to a network side, wherein the network side changes a current default bearer of the UE according to the information carried in the request message, to a bearer corresponding to a service that the UE needs to obtain in a current serving cell.

7. The communication device according to claim 6, further comprising:
a determining unit, configured to determine whether a current target cell is a restricted serving cell, and instruct the generating unit to generate a request message if the current target cell is not the restricted serving cell.

8. A communication device, comprising:
a receiving unit, configured to receive a request message initiated by a user equipment (UE); and
a processing unit, configured to change a current default bearer of the UE according to the received request message, to a bearer corresponding to a service that the UE needs to obtain in a current serving cell.

9. The communication device according to claim 8, wherein:
the request message received by the receiving unit carries information indicating the service that the UE needs to obtain; and
the processing unit changes the current default bearer of the UE according to the information that is carried in the request message and indicates the service that the UE needs to obtain, to the bearer corresponding to the service that the UE needs to obtain in the current serving cell.

10. The communication device according to claim 9, wherein:
the processing unit changes the current default bearer of the UE in the current serving cell to a normal default bearer when the request message is a tracking area update (TAU) request message which carries an indication field indicating a handover from a restricted serving cell to a normal serving cell or an update type field indicating the handover from the restricted serving cell to the normal serving cell;
the processing unit changes the current default bearer of the UE in the current serving cell to an emergency default bearer when the request message is a TAU request message which carries an indication field indicating a handover from a normal serving cell to a restricted serving cell or an update type field indicating the handover from the normal serving cell to the restricted serving cell;
the processing unit changes the current default bearer of the UE in the current serving cell to the normal default bearer when the request message is an Attach message which carries an Attach Type indicating non-emergency; and
the processing unit changes the current default bearer of the UE in the current serving cell to an emergency default bearer when the request message is an Attach message which carries Attach Type indicating emergency.

11. A communication system, comprising:
a user equipment (UE), configured to initiate a request message, wherein the request message carries information indicating a service that the UE needs to obtain; and
a network side device, configured to receive the request message initiated by the UE, and change a current default bearer of the UE according to the information indicating the service that the UE needs to obtain, to a bearer corresponding to the service that the UE needs to obtain in a current serving cell.
